# EUROPEAN PATENT SPECIFICATION

(11) **EP 3 550 193 B1**
(45) Date of publication and mention of the grant of the patent: **25.08.2021**
(21) Application number: 17875890.0
(22) Date of filing: 30.11.2017
(51) Int. Cl.: F25B 41/30, F25B 41/31, F25B 41/35, F16K 1/00, F16K 47/02

(54) **ELECTRONIC EXPANSION VALVE AND REFRIGERATION SYSTEM HAVING SAME**
ELEKTRONISCHES EXPANSIONSVENTIL UND KÜHLSYSTEM DAMIT
VANNE DE DÉTENTE ÉLECTRONIQUE ET SYSTÈME DE RÉFRIGÉRATION COMPORTANT CELLE-CI

(30) Priority: 30.11.2016 CN 201611085736
(43) Date of publication of application: 09.10.2019
(73) Proprietor: Zhejiang Sanhua Intelligent Controls Co., Ltd., Shaoxing, Zhejiang 312500 (CN)
(72) Inventor: WANG, Yudong, Shaoxing Zhejiang 312500 (CN); SHU, Xiaohui, Shaoxing Zhejiang 312500 (CN)
(74) Representative: Maikowski & Ninnemann Patentanwälte Partnerschaft mbB
(86) International application number: PCT/CN2017/113893
(87) International publication number: WO 2018/099422

(56) References cited:
- WO-A1-2013/170542
- CN-A- 102 644 785
- CN-A- 102 901 279
- CN-A- 103 511 636
- CN-A- 105 626 876
- JP-A- H08 135 829

## Description

### FIELD

The present application relates to the technical field of refrigeration, and in particular to an electronic expansion valve and a refrigeration system having the same.

### BACKGROUND

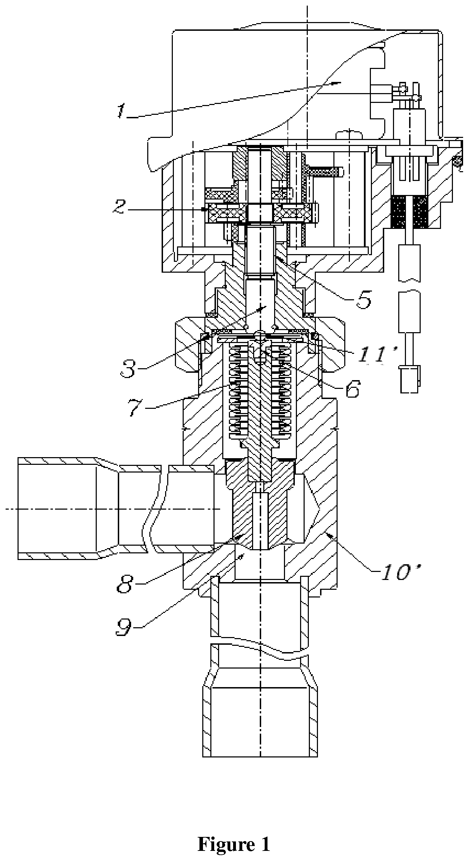

The document CN 103 511 636 A is considered as the closest prior art and discloses an electronic expansion valve which is shown in Figure 1. As shown in this Figure, in the conventional art, a deceleration type electronic expansion valve used in an inverter air conditioner is mainly composed of two parts, one part is a valve body part for flow regulation, and the other part is a coil part for driving. The coil part includes a permanent magnet stepper motor 1, a three-stage gear reducer 2, and a threaded pair structure 5 for converting the rotational movement of the motor into the vertical movement of a screw rod 3. The valve body includes including a valve seat 10', and core components such as a corrugated pipe s 7 that controls a valve needle 8 to move up and down. The working principle of the above electronic expansion valve is described as follows. First, an electronic controller of an air conditioning system controls an output shaft of the stepper motor 1 of the electronic expansion valve to rotate, the motor 1 cooperates with the gear reducer 2 to drive an output shaft of the gear reducer 2 to rotate, and the output shaft of the gear reducer 2 cooperates with the screw rod to drive the screw rod to rotate, then the screw rod cooperates with the thread substructure 5, to allow the screw rod to move up and down. A steel ball 11' is welded at a top end of the screw rod, a lower end of the steel ball 11' is provided with a liner 6, and a lower end of the liner 6 is connected to the valve needle 8. When the screw rod is driven by a driving component to move downward, the screw rod bears against the steel ball 11, the steel ball 11' bears against the liner 6, and the liner 6 bears against the valve needle, to allow the valve needle 8 to move downward together with the screw rod until the valve needle 8 is in a closed position, which is the position that the valve needle 8 abuts against the valve body 10'. When the valve needle 8 is at the closed position, the corrugated pipe 7 is in a continuously tensioned state. When a reverse pulse is applied, the screw rod 3 moves upward, and the valve needle 8 continuously moves upward under actions of the restoring elastic force of the corrugated pipe 7 and the system pressure, so that an opening degree of a valve port 9 is changed, and the flow area is changed, and thereby achieving the purpose of controlling the flow rate to adjust the degree of superheat.

However, the above electronic expansion valve has a noise problem in actual operation. Specifically, in a case that an opening degree between the valve body and the valve port is small, due to the small opening degree of the valve port, obvious throttling will occur. The refrigerant passes through the valve port with a large flow velocity, causing a vortex with a specific frequency, resulting in abnormal noise, which affects the terminal user's comfort level.

### SUMMARY

A main object of the present application is to provide an electronic expansion valve and a refrigeration system having the same, to address the problem of loud noise of the electronic expansion valve in the conventional art.

In order to realize the above purpose, an electronic expansion valve is provided according to claim 1. Preferred embodiments are defined in the dependent claims.

Further, the first sealing portion is made of a polymer material or a soft metallic material.

Further, the valve needle includes a valve needle body and a valve seat core arranged in the valve needle body, the accommodation space is defined by an inner wall of the valve needle body and an upper surface of the valve seat core, and the second valve port and the second flow passage are arranged at the valve seat core.

Further, the first sealing portion is a first sealing ring, the first sealing ring is clamped between the valve seat core and the first silencing portion, the first sealing portion is provided with a first interference avoiding hole for avoiding the valve stem, and a peripheral side wall of the first sealing portion is fitted to the inner wall of the valve needle.

Further, the second flow passage is a first flow hole, there are multiple first flow holes, and the multiple first flow holes are arranged in a peripheral direction of the second valve port.

Further, the third flow passage is a second flow hole, there are multiple second flow holes, and the multiple second flow holes are arranged in one-to-one correspondence with the multiple first flow holes.

Further, the second flow holes are arc-shaped holes.

Further, the first silencing portion includes a first silencing structure and a second silencing structure, the first silencing structure is located above the second silencing structure, the first silencing structure blocks the first flow passage, and the second silencing structure blocks the third flow passage.

Further, the electronic expansion valve includes a second sealing portion, and the second sealing portion is arranged between the first silencing structure and the second silencing structure, to separate the first silencing structure and the second silencing structure.

Further, the second sealing portion is a second sealing ring, the second sealing ring is provided with a second interference avoiding hole for avoiding the valve stem, and a peripheral side wall of the second sealing portion is fitted to the inner wall of the valve needle.

Further, the second sealing portion is made of a polymer material or a soft metallic material.

Further, both the first silencing structure and the second silencing structure are mesh-like silencing members, the first silencing structure and the second silencing structure are integrally formed, and a size of a mesh opening of the first silencing structure is different from a size of a mesh opening of the second silencing structure.

Further, the electronic expansion valve includes a second silencing portion, and the second silencing portion is arranged below the second valve port.

A refrigeration system is provided according to another aspect of the present application, including the above electronic expansion valve.

According to the technical solution of the present application, the electronic expansion valve includes a first sealing portion, the first sealing portion is arranged in the accommodation space and located between the first silencing portion and the second flow passage, the first sealing portion is provided with a third flow passage, and the accommodation space is in communication with the second flow passage through the third flow passage. When the valve needle is at the closed position and the valve stem abuts against the second valve port, the electronic expansion valve is in a small flow state. When the fluid enters the accommodation space from the first flow passage, a part of the fluid is silenced by the first silencing portion and then flows into the third flow passage, and finally flows out from the second flow passage; another part of the fluid that is not silenced by the first silencing portion is blocked by the first sealing portion and flows, in a direction opposite to the previous flow direction, into the first silencing portion for noise reduction. This part of the fluid which is silenced flows into the third flow passage and finally flows out from the second flow passage. Therefore, with the above structure, all of the fluid entering the accommodation space from the first flow passage enters the first silencing portion for noise reduction, which improves the noise reduction effect and reduces the noise of the electronic expansion valve, and thereby solving the problem of loud noise of the electronic expansion valve in the conventional art.

### BRIEF DESCRIPTION OF DRAWINGS

The drawings which form a part of the present application are intended to provide further understanding of this application, the illustrative embodiments of the present application and the description thereof are intended to explain the present application and are not intended to improperly limit the present application. In the drawings:
Figure 1 is a schematic longitudinal sectional view showing the structure of an electronic expansion valve in the conventional art;
Figure 2 is a schematic longitudinal sectional view showing the structure of an electronic expansion valve according to a first embodiment of the present application;
Figure 3 is a partially enlarged view showing the structure of a portion A of the electronic expansion valve in Figure 2;
Figure 4 is a schematic sectional structural view showing cooperation between a valve stem and a valve needle of the electronic expansion valve in Figure 2;
Figure 5 is a front structural view showing the cooperation between the valve stem and the valve needle in Figure 4;
Figure 6 is an exploded schematic structural view showing a first silencing portion, a first sealing portion, a second sealing portion and a valve seat core of the electronic expansion valve in Figure 2;
Figure 7 is a schematic sectional view showing the structure of the valve needle of the electronic expansion valve in Figure 2; and
Figure 8 is a schematic longitudinal sectional structural view showing cooperation between a valve stem and a valve needle of an electronic expansion valve according to a second embodiment of the present application.

Reference Numerals in the drawings:

| | | | |
|---|---|---|---|
| 10 | valve body, | 11 | first valve port, |
| 20 | valve needle, | 21 | valve needle body, |
| 211 | first flow passage, | 22 | valve seat core, |
| 221 | second valve port, | 222 | second flow passage, |
| 223 | flow guide groove, | 23 | accommodation space, |
| 30 | valve stem, | 40 | first silencing portion, |
| 41 | first silencing structure, | 411 | third interference avoiding hole, |
| 42 | second silencing structure, | 421 | fourth interference avoiding hole, |
| 50 | first sealing portion, | 51 | third flow passage, |
| 52 | first interference avoiding hole, | 60 | second sealing portion, |
| 70 | second silencing portion. | | |

### DETAILED DESCRIPTION

It should be noted that embodiments in the present application and features in the embodiments may be combined with each other without conflict. The present application will be described in detail hereinafter with reference to the drawings in conjunction with the embodiments.

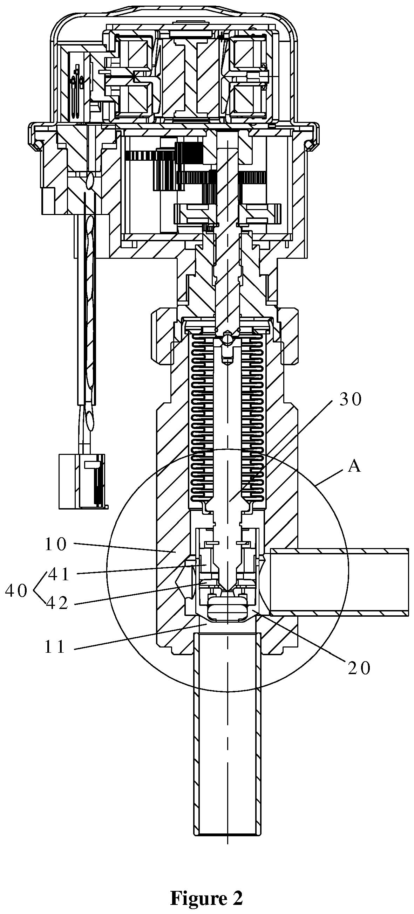

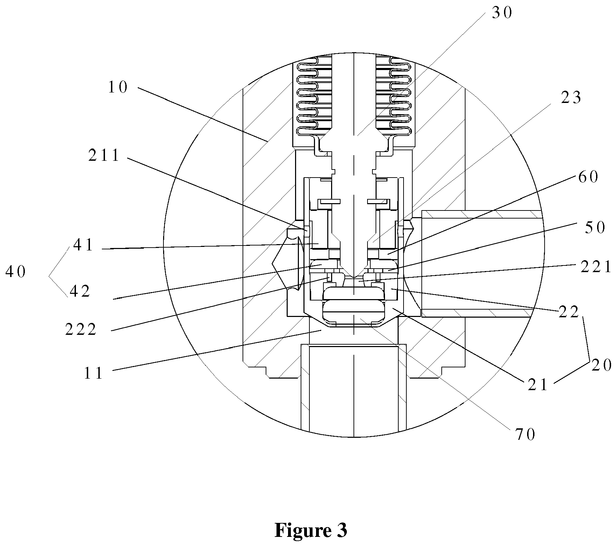

As shown in Figures 2 to 5, an electronic expansion valve according to a first embodiment includes:
a valve body 10 having a first valve port 11;
a valve needle 20 having a closed position abutting against the first valve port 11 and an open position away from the first valve port 11, wherein a bottom of the valve needle 20 is provided with a second valve port 221 in communication with the first valve port 11, the valve needle 20 is provided with an accommodation space 23 and a first flow passage 211 and a second flow passage 222 both in communication with the accommodation space 23, the first flow passage 211 is located in a side wall of the valve needle 20 and is in communication with an outside, and the second flow passage 222 is located at a peripheral outer side of the second valve port 221 and is in communication with the second valve port 221;
a valve stem 30 having at least a part of the valve stem 30 penetrate into the accommodation space 23, wherein the valve stem 30 is allowed to move up and down, to adjust a flow rate at the second valve port 221;
a first silencing portion 40, wherein the first silencing portion is arranged in the accommodation space 23, so that a fluid entering from the first flow passage 211 is allowed to pass through the first silencing portion 40 to flow to the second flow passage 222;
a first sealing portion 50, wherein the first sealing portion is arranged in the accommodation space 23 and located between the first silencing portion 40 and the second flow passage 222, the first sealing portion 50 is provided with a third flow passage 51, and the accommodation space 23 is in communication with the second flow passage 222 through the third flow passage 51; and
a driving portion configured to drive the valve stem 30 to move up and down; and
wherein a stop member is provided between the valve stem 30 and the valve needle 20, so that the valve needle 20 and the valve stem 30 move synchronously when the valve needle 20 is in contact with the valve stem 30 through the stop member, and the stop member allows the valve stem 30 to move up and down with respect to the valve needle 20 when the valve needle 20 is located at the closed position.

According to the technical solution of this embodiment, the electronic expansion valve includes a first sealing portion 50, the first sealing portion 50 is arranged in the accommodation space 23 and located between the first silencing portion 40 and the second flow passage 222, the first sealing portion 50 is provided with a third flow passage 51, and the accommodation space 23 is in communication with the second flow passage 222 through the third flow passage 51. When the valve needle 20 is at the closed position and the valve stem abuts against the second valve port 221, the electronic expansion valve is in a small flow state. When the fluid enters the accommodation space 23 from the first flow passage 211, a part of the fluid is silenced by the first silencing portion 40 and then flows into the third flow passage 51, and finally flows out from the second flow passage 222; another part of the fluid that is not silenced by the first silencing portion 40 is blocked by the first sealing portion 50 and flows, in a direction opposite to a previous flow direction, into the first silencing portion 40 for noise reduction. This part of the silenced fluid flows into the third flow passage 51 and finally flows out from the second flow passage 222. Therefore, with the above structure, all of the fluid entering the accommodation space 23 from the first flow passage 211 enters the first silencing portion 40 for noise reduction, which improves a noise reduction effect and reduces noise of the electronic expansion valve, and thereby solving the problem of loud noise of the electronic expansion valve in the conventional art.

An operating principle of the electronic expansion valve is briefly described hereinafter.

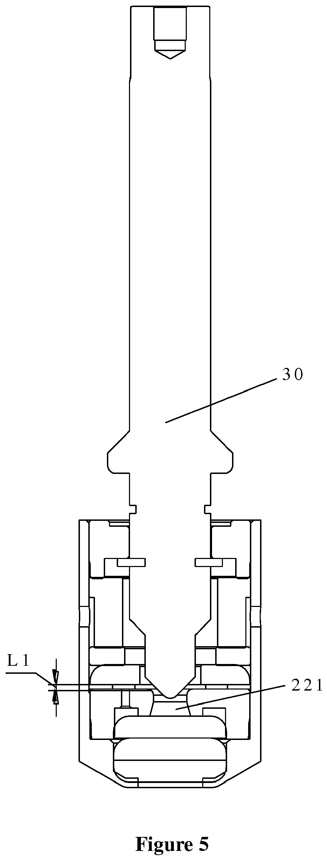

When the valve stem 30 is driven to move downward by the driving portion, the valve needle 20 comes into contact with the stop member due to its own weight and a pressure differential force. The valve needle 20 is able to move synchronously with the valve stem 30 in this state due to the structure of the stop member until the valve needle 20 is at the closed position. When the valve needle 20 is at the closed position, the valve needle 20 starts to separate from the stop member, at this time, the valve stem 30 is able to move downward with respect to the valve needle 20. When the valve stem 30 abuts against the second valve port 221, the electronic expansion valve is in the small flow state. When the valve stem 30 is driven to move upward by the driving portion, the valve stem 30 is able to move upward with respect to the valve needle 20 until the valve needle 20 comes into contact with the stop member. When the valve needle 20 is in contact with the stop member, the valve stem 30 starts to drive the valve needle 20 to move upward together. When the motor is started to reach a fully open pulse, the whole electronic expansion valve is in a fully open state. It should be noted that, as shown in Figure 5, the valve stem 30 is able to move up and down within a travel range L1 by the driving of the driving portion. The above structure allows a small flow regulating section, which is easy to generate noise, to be separated as an independent unit, that is, L1 is related to an opening degree of a section where the noise is generated.

In the first embodiment, the first sealing portion 50 is made of a polymer material or a soft metallic material. The polymer material may be rubber or plastic, and the soft metal material may be various metallic materials having plasticity and low rigidity. The above structure allows the first sealing portion 50, after being pressed, to be embedded into the first silencing portion 40 having an uneven surface, so that there is no gap between the first silencing portion 40 and the first sealing portion 50. That is, all of the fluid entering from the first flow passage 211 or the second flow passage 222 will enter the first silencing portion 40 for noise reduction, thereby improving the noise reduction effect.

As shown in Figures 2 to 6, in the first embodiment, the valve needle 20 includes a valve needle body 21 and a valve seat core 22 arranged in the valve needle body 21, the accommodation space 23 is defined by an inner wall of the valve needle body 21 and an upper surface of the valve seat core 22, and both the second valve port 221 and the second flow passage 222 are arranged at the valve seat core. The above structure is simple, and easy to manufacture and assemble.

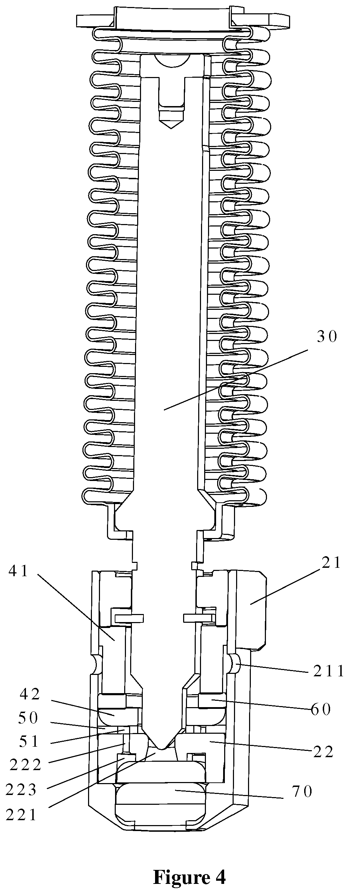

As shown in Figure 4, in the first embodiment, the valve seat core 22 is further provided with a flow guide groove 223, and the flow guide groove 223 is arranged at a lower portion of the valve seat core 22 and is in communication with the second flow passage 222.

As shown in Figures 4, 6 and 7, in the first embodiment, the first sealing portion 50 is a first sealing ring, the first sealing ring is clamped between the valve seat core 22 and the first silencing portion 40, the first sealing ring is provided with a first interference avoiding hole 52 for avoiding the valve stem 30, and a peripheral side wall of the first sealing portion 50 is fitted to the inner wall of the valve needle 20. The above structure is simple, and easy to process. Moreover, with the above structure, a gap between the valve seat core 22 and the first silencing portion 40 is further blocked, thereby improving the noise reduction effect.

It should be noted that, since the surface of the first silencing portion 40 is uneven, a part of the fluid which is not silenced may flow from uneven gaps (a gap between the first silencing portion 40 and the inner wall of the valve needle 20, and the gap between the first silencing portion 40 and the upper surface of the valve seat core 22) to the first flow passage 211 or the second flow passage 222 and then flows out, resulting in a poor noise reduction effect. Preferably, as shown in Figures 4, 5 and 7, in the first embodiment, an outer diameter of the first sealing ring matches an inner diameter of the valve needle, and an upper surface of the first sealing ring may be embedded into the first silencing portion 40 having the uneven surface after being pressed. A lower surface of the first sealing ring abuts against the upper surface of the valve seat core 22. With the above structure, there is no gap between the first silencing portion 40 and the valve seat core 22, which ensures that all of the fluid entering from the first flow passage 211 or the second flow passage 222 enters the first silencing portion 40 for noise reduction, thereby improving the noise reduction effect.

It should also be noted that, the first sealing ring is made of a polymer material or a soft metallic material, and the polymer material may be rubber, plastic, etc., and the soft metallic material may be various metal materials having plasticity and low rigidity. Since the polymer material or the soft metallic material has advantages of low rigidity and high strength, the gap which may exist between the first silencing portion 40 and the valve seat core 22 can be effectively eliminated, thereby better improving the noise reduction effect and reducing the noise generated by the electronic expansion valve.

As shown in Figures 4 to 7, in the first embodiment, the second flow passage 222 is embodied as a first flow hole, there are multiple first flow holes, and the multiple first flow holes are arranged in a peripheral direction of the second valve port 221. With the above structure, a flow rate of the fluid when the electronic expansion valve is in a small flow state is increased, and the number and diameters of the first flow holes may be designed according to actual conditions.

As shown in Figures 4 to 7, in the first embodiment, the third flow passage 51 is embodied as a second flow hole, there are multiple second flow holes, and the multiple second flow holes are arranged in one-to-one correspondence with the multiple first flow holes. With the above structure, the flow rate of the fluid when the electronic expansion valve is in the small flow state is increased, and the number of the second flow holes may be designed according to actual conditions.

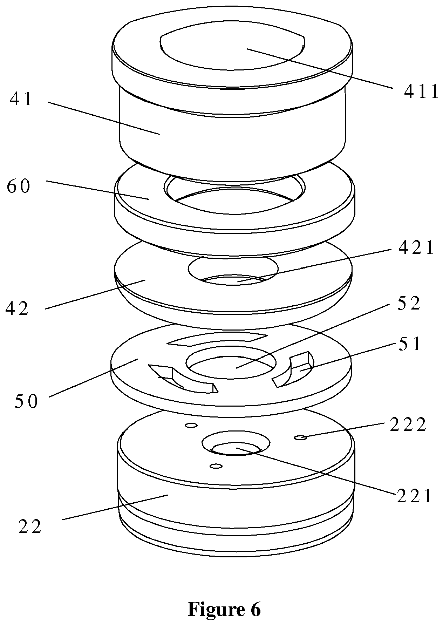

As shown in Figure 6, in the first embodiment, the second flow holes are arc-shaped holes. Since the arc-shaped hole is long, with the above structure, it is easier for workers to align the second flow holes with the first flow holes during installation, which facilitates installation for the workers, and thereby improving working efficiency.

As shown in Figures 2 to 5, in the first embodiment, the first silencing portion 40 includes a first silencing structure 41 and a second silencing structure 42, the first silencing structure 41 is located above the second silencing structure 42, the first silencing structure 41 blocks the first flow passage 211, and the second silencing structure 42 blocks the third flow passage 51. With the above structure, a utilization ratio of the first silencing portion 40 is improved, and thereby reducing the noise of the electronic expansion valve.

In order to further improve the noise reduction effect of the first silencing portion 40, as shown in Figures 2 to 7, in the first embodiment, the electronic expansion valve further includes a second sealing portion 60, the second sealing portion 60 is arranged between the first silencing structure 41 and the second silencing structure 42, to separate the first silencing structure 41 and the second silencing structure 42. Specifically, when the valve needle 20 is at the closed position and the valve stem 30 abuts against the second valve port 221, the electronic expansion valve is in the small flow state. When the fluid enters from the first flow passage 211, a part of the fluid flows into the accommodation space 23 after being silenced by the first silencing structure 41.The fluid flowing into the accommodation space 23 continues to flow to the second silencing structure 42. Another part of the fluid is blocked by the second sealing portion 60, so that it is repeatedly silenced in the first silencing structure 41 until it enters the accommodation space 23. When the fluid which has flowed into the accommodation space 23 flows into the second silencing structure 42 for noise reduction, a part of the fluid flows out from the second flow passage 222 directly through the third flow passage 51. Another part of the fluid will be blocked by the first sealing portion 50 and flow into the first silencing portion 40 in a direction opposite to a previous flow direction for secondary noise reduction. This part of the fluid that is silenced flows into the third flow passage 51 and finally flows out from the second flow passage 222.

When the fluid flows in from the second flow passage 222, the fluid will enter the second silencing structure 42 directly through the third flow passage 51 for noise reduction, after the fluid is silenced, a part of the fluid directly enters the fluid accommodation space 23. The fluid flowing into the accommodation space 23 continues to flow to the first silencing structure 41. Another part of the fluid is blocked by the second sealing portion 60, so that it is repeatedly silenced in the second silencing structure 42 until it flows into the accommodation space 23. All of the fluid that has flowed into the accommodation space 23 will flow into the first silencing portion 40 for secondary noise reduction.

The above structure has the following two advantages. With the arrangement of the first sealing portion 50 and the second sealing portion 60, the first silencing portion 40 can be utilized repeatedly, which increases the utilization ratio, and improves the noise reduction effect. With the arrangement of the first sealing portion 50 and the second sealing portion 60, an effective distance through which the fluid is silenced is longer, which effectively prevents the fluid from flowing directly from the gap between the first silencing structure 41 and the second silencing structure 42.

It should be noted that, in the first embodiment, an annular area of the accommodation space 23 is much larger than an area of the first flow-through channel 211, so that the fluid can be silenced again after flowing into the accommodation space 23, which significantly improves the noise reduction effect. Moreover, the above technical structure is relatively simple and has good manufacturability.

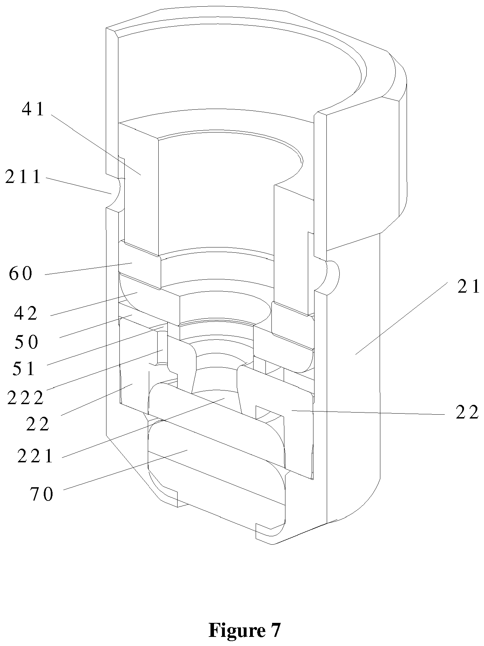

As shown in Figures 6 and 7, in the first embodiment, the second sealing portion 60 is a second sealing ring, and the second sealing ring is provided with a second interference avoiding hole for avoiding the valve stem 30. A peripheral side wall of the second sealing portion 60 is fitted to the inner wall of the valve needle 20. The above structure is simple, easy to process and assemble. Moreover, with the above structure, the gap between the first silencing structure 41 and the second silencing structure 42 is further blocked, and thereby further improving the noise reduction effect.

In the first embodiment, the second sealing portion 60 is made of a polymer material or a soft metallic material. The polymer material may be rubber or plastic, and the soft metallic material may be various metallic materials having plasticity and low rigidity. Specifically, an outer diameter of the second sealing ring matches the inner diameter of the valve needle 20. When being pressed, an upper surface of the second sealing ring may be embedded into the first silencing structure 41 having an uneven surface, and a lower surface of the second sealing ring may be embedded into the second silencing structure 42 having an uneven surface. With the above structure, there is no gap between the first silencing structure 41 and the second silencing structure 42, so that the effective distance through which the fluid entering the first silencing portion 40 is silenced is long, which increases the utilization ratio of the first silencing portion 40, and thereby improving the noise reduction effect of the electronic expansion valve.

As shown in Figures 2 to 7, in the first embodiment, the electronic expansion valve further includes a second silencing portion 70, the second silencing portion 70 is arranged below the second valve port 221. Specifically, when the fluid flows from the first flow passage 211 to the second flow passage 222, it is first silenced by the first silencing portion 40, and then silenced again by the second silencing portion 70. Similarly, when the fluid flows from the second flow passage 222 to the first flow passage 211, it is first silenced by the second silencing portion 70, and then silenced again by the first silencing portion 40. Therefore, with the above structure, the fluid can be silenced twice, thereby significantly improving the noise reduction effect and reducing the noise of the electronic expansion valve.

As shown in Figure 6, in the first embodiment, the first silencing structure 41 is in a cylindrical shape, and a middle portion of the first silencing structure 41 is provided with a third interference avoiding hole 411 for avoiding the valve stem 30. The second silencing structure 42 is in an annular shape, and a middle portion of the second silencing structure 42 is provided with a fourth interference avoiding hole 421 for avoiding the valve stem 30.

In the first embodiment, both the first silencing structure 41 and the second silencing structure 42 are mesh-like silencing elements. Preferably, the second silencing structure 42 is supported by a material such as a fine mesh plate which can be slightly compressed, and when the second silencing structure 42 is pressed, an uneven portion of the second silencing structure 42 may be inserted into the third flow passage 51.

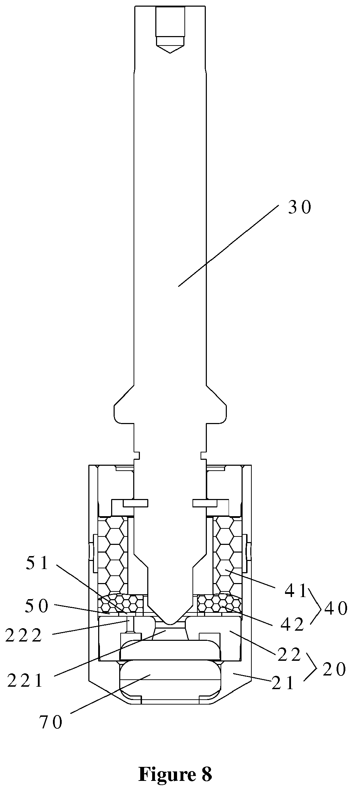

As shown in Figure 8, the electronic expansion valve according to a second embodiment differs from the first embodiment in the specific structure of the first silencing portion 40. Specifically, in the second embodiment, both the first silencing structure 41 and the second silencing structure 42 are mesh-like silencing elements, and the first silencing structure 41 and the second silencing structure 42 are integrally formed, a size of a mesh opening of the first silencing structure 41 is different from a size of a mesh opening of the second silencing structure 42. The above structure makes the noise reduction effect better. It should be noted that, the above structure may be arranged according to actual requirements of noise reduction and flow disturbance, for example, the mesh opening of the first silencing structure 41 may be arranged to be larger than the mesh opening of the second silencing structure 42.

Flow processes of the fluid when the electronic expansion valve is in different states are described in detail hereinafter.

When the valve needle 20 is at the closed position, the valve stem 30 abuts against the second valve port 221, and the fluid flows in from the first flow passage 211:
since the first silencing structure 41 and the second silencing structure 42 are sealingly isolated, the fluid flowing in from the first flow passage 211 enters the accommodation space 23 via the first silencing structure 41 first, and then enters the third flow passages 51 via the second silencing structure 42, and finally flows through the second silencing portion 70 at a bottom via the second flow passage 222 and flows to the first valve port 11.

When the valve needle 20 is at the closed position, the valve stem 30 begins to move away from the second valve port 221, and the fluid flows in from the first flow passage 211:
since the first silencing structure 41 and the second silencing structure 42 are sealingly isolated, the fluid flowing in from the first flow passage 211 enters the accommodation space 23 via the first silencing structure 41 first. After entering the accommodation space 23, a part of the fluid enters the third flow passage 51 via the second silencing structure 42, and finally flows through the second silencing portion 70 at the bottom via the second flow passage 222 and flows to the first valve port 11. Another part of the fluid flows out from the second valve port 221 through an opening gap between the valve stem 30 and the valve seat core 22, and then flows into the second silencing portion 70 for noise reduction, and finally flows into the first valve port 11.

When the valve needle 20 is at the closed position, the valve stem 30 abuts against the second valve port 221, and the fluid flows in from the second flow passage 222:
the fluid flowing in from the second flow passage 222 flows into, after passing through the second silencing portion 70, the flow guide groove 223 on the valve seat core 22, the second flow passage 222, and the third flow passage 51 in sequence, to enter the second silencing structure 42. Since the first silencing structure 41 and the second silencing structure 42 are sealingly isolated, after entering the accommodation space 23, the fluid will pass through the first silencing structure 41 again, and finally flows out from the first flow passage 211.

When the valve needle 20 is at the closed position, the valve stem 30 begins to move away from the second valve port 221, and the fluid flows in from the second flow passage 222:
the fluid flowing in from the second flow passage 222 enters the second silencing portion 70 for noise reduction, and a part of the silenced fluid flows into the flow guide groove 223 at a bottom of the valve seat core 22, the second flow passage 222, and the second silencing structure 42 in sequence, to enter the accommodation space 23; and another part of the fluid enters the accommodation space 23 through the opening gap between the valve stem 30 and the valve seat core 22. Since the first silencing structure 41 and the second silencing structure 42 are sealingly isolated, after entering the accommodation space 23, the fluid will pass through the first silencing structure 41 again, and finally flows out from the first flow passage 211.

A refrigeration system is further provided according to the present application, an embodiment (not shown in Figures) of the refrigeration system according to the present application includes an electronic expansion valve, which is the electronic expansion valve described above. Since the above electronic expansion valve has an advantage of low noise, the refrigeration system having the electronic expansion valve has the above advantage.

## Claims

1. An electronic expansion valve, comprising:
a valve body (10) having a first valve port (11);
a valve needle (20), wherein the valve needle (20) has a closed position abutting against the first valve port (11) and an open position away from the first valve port (11), a bottom of the valve needle (20) is provided with a second valve port (221) in communication with the first valve port (11), the valve needle (20) is provided with an accommodation space (23) and a first flow passage (211) and a second flow passage (222) both in communication with the accommodation space (23), the first flow passage (211) is located in a side wall of the valve needle (20) and is in communication with an outside, and the second flow passage (222) is located at a peripheral outer side of the second valve port (221) and is in communication with the second valve port (221);
a valve stem (30), wherein the valve stem (30) is arranged to allow at least a part of the valve stem (30) to penetrate into the accommodation space (23), and the valve stem (30) is movable up and down, to adjust a flow rate at the second valve port (221);
a first silencing portion (40), wherein the first silencing portion (40) is arranged in the accommodation space (23), to allow a fluid entering from the first flow passage (211) to pass through the first silencing portion (40) to flow to the second flow passage (222);
a first sealing portion (50), wherein the first sealing portion (50) is arranged in the accommodation space (23) and located between the first silencing portion (40) and the second flow passage (222), the first sealing portion (50) is provided with a third flow passage (51), and the accommodation space (23) is in communication with the second flow passage (222) through the third flow passage (51); and
a driving portion configured to drive the valve stem (30) to move up and down; and
wherein a stop member is provided between the valve stem (30) and the valve needle (20), to allow the valve needle (20) and the valve stem (30) to move synchronously when the valve needle (20) is in contact with the valve stem (30) through the stop member; and the stop member is also configured to allow the valve stem (30) to move up and down with respect to the valve needle (20) when the valve needle (20) is located at the closed position.

2. The electronic expansion valve according to claim 1, wherein the first sealing portion (50) is made of a polymer material or a soft metallic material.

3. The electronic expansion valve according to claim 1, wherein the valve needle (20) comprises a valve needle body (21) and a valve seat core (22) arranged in the valve needle body (21), the accommodation space (23) is defined by an inner wall of the valve needle body (21) and an upper surface of the valve seat core (22), and the second valve port (221) and the second flow passage (222) are arranged at the valve seat core (22).

4. The electronic expansion valve according to claim 3, wherein the first sealing portion (50) is a first sealing ring, the first sealing ring is clamped between the valve seat core (22) and the first silencing portion (40), the first sealing portion is provided with a first interference avoiding hole (52) for avoiding the valve stem (30), and a peripheral side wall of the first sealing portion (50) is fitted to the inner wall of the valve needle (20).

5. The electronic expansion valve according to claim 1, wherein the second flow passage (222) is embodied as a first flow hole, there are a plurality of first flow holes, and the plurality of the first flow holes are arranged in a peripheral direction of the second valve port (221).

6. The electronic expansion valve according to claim 5, wherein the third flow passage (51) is embodied as a second flow hole, there are a plurality of second flow holes, and the plurality of the second flow holes are arranged in one-to-one correspondence with the plurality of the first flow holes.

7. The electronic expansion valve according to claim 6, wherein the second flow holes are arc-shaped holes.

8. The electronic expansion valve according to claim 1, wherein the first silencing portion (40) comprises a first silencing structure (41) and a second silencing structure (42), the first silencing structure (41) is located above the second silencing structure (42), the first silencing structure (41) is configured to block the first flow passage (211), and the second silencing structure (42) is configured to block the third flow passage (51).

9. The electronic expansion valve according to claim 8, further comprising a second sealing portion (60), wherein the second sealing portion (60) is arranged between the first silencing structure (41) and the second silencing structure (42), to separate the first silencing structure (41) from the second silencing structure (42).

10. The electronic expansion valve according to claim 9, wherein the second sealing portion (60) is a second sealing ring, the second sealing ring is provided with a second interference avoiding hole for avoiding the valve stem (30), and a peripheral side wall of the second sealing portion (60) is fitted to the inner wall of the valve needle (20).

11. The electronic expansion valve according to claim 9, wherein the second sealing portion (60) is made of a polymer material or a soft metallic material.

12. The electronic expansion valve according to claim 8, wherein both the first silencing structure (41) and the second silencing structure (42) are mesh-like silencing members, the first silencing structure (41) and the second silencing structure (42) are integrally formed, and a size of a mesh opening of the first silencing structure (41) is different from a size of a mesh opening of the second silencing structure (42).

13. The electronic expansion valve according to claim 1, further comprising a second silencing portion (70) arranged below the second valve port (221).

14. A refrigeration system, comprising an electronic expansion valve, wherein the electronic expansion valve is the electronic expansion valve according to any one of claims 1 to 13.

## Patentansprüche

1. Elektronisches Expansionsventil, umfassend:
einen Ventilkörper (10) mit einer ersten Ventilöffnung (11) ;
eine Ventilnadel (20), wobei die Ventilnadel (20) eine geschlossene Position aufweist, die an der ersten Ventilöffnung (11) anliegt, und eine offene Position, die von der ersten Ventilöffnung (11) entfernt ist, wobei ein Boden der Ventilnadel (20) mit einer zweiten Ventilöffnung (221) bereitgestellt ist, die mit der ersten Ventilöffnung (11) in Verbindung steht, wobei die Ventilnadel (20) mit einem Aufnahmeraum (23) und einem ersten Strömungsdurchgang (211) und einem zweiten Strömungsdurchgang (222) bereitgestellt ist, die beide mit dem Aufnahmeraum (23) in Verbindung stehen, wobei der erste Strömungsdurchgang (211) in einer Seitenwand der Ventilnadel (20) angeordnet ist und mit einer Außenseite in Verbindung steht, und der zweite Strömungsdurchgang (222) an einer äußeren Umfangsseite der zweiten Ventilöffnung (221) angeordnet ist und mit der zweiten Ventilöffnung (221) in Verbindung steht;
einen Ventilschaft (30), wobei der Ventilschaft (30) dazu angeordnet ist, dass zumindest ein Teil des Ventilschaftes (30) in den Aufnahmeraum (23) eindringen kann, und der Ventilschaft (30) zum Einstellen einer Durchflussrate an der zweiten Ventilöffnung (221) nach oben und unten bewegbar ist;
einen ersten Schalldämpfungsabschnitt (40), wobei der erste Schalldämpfungsabschnitt (40) im Aufnahmeraum (23) dazu angeordnet ist, zu ermöglichen, dass ein Fluid, das vom ersten Strömungsdurchgang (211) eintritt, durch den ersten Schalldämpfungsabschnitt (40) hindurchgeht und zum zweiten Strömungsdurchgang (222) strömt;
einen ersten Dichtungsabschnitt (50), wobei der erste Dichtungsabschnitt (50) im Aufnahmeraum (23) angeordnet ist und sich zwischen dem ersten Schalldämpfungsabschnitt (40) und dem zweiten Strömungsdurchgang (222) befindet, der erste Dichtungsabschnitt (50) mit einem dritten Strömungsdurchgang (51) bereitgestellt ist und der Aufnahmeraum (23) durch den dritten Strömungsdurchgang (51) mit dem zweiten Strömungsdurchgang (222) in Verbindung steht; und
einen Antriebsabschnitt, der dafür ausgelegt ist, den Ventilschaft (30) zur Auf- und Abwärtsbewegung anzutreiben; und
wobei ein Anschlagelement zwischen dem Ventilschaft (30) und der Ventilnadel (20) dazu bereitgestellt ist, es der Ventilnadel (20) und dem Ventilschaft (30) zu ermöglichen, sich synchron zu bewegen, wenn die Ventilnadel (20) durch das Anschlagelement in Kontakt mit dem Ventilschaft (30) ist; und das Anschlagelement außerdem dafür ausgelegt ist, dem Ventilschaft (30) zu ermöglichen, sich in Bezug auf die Ventilnadel (20) nach oben und unten zu bewegen, wenn sich die Ventilnadel (20) in der geschlossenen Position befindet.

2. Elektronisches Expansionsventil nach Anspruch 1, wobei der erste Dichtungsabschnitt (50) aus einem Polymermaterial oder einem weichen metallischen Material hergestellt ist.

3. Elektronisches Expansionsventil nach Anspruch 1, wobei die Ventilnadel (20) einen Ventilnadelkörper (21) und einen im Ventilnadelkörper (21) angeordneten Ventilsitzkern (22) umfasst, der Aufnahmeraum (23) durch eine Innenwand des Ventilnadelkörpers (21) und eine obere Fläche des Ventilsitzkerns (22) definiert ist, und die zweite Ventilöffnung (221) und der zweite Strömungsdurchgang (222) am Ventilsitzkern (22) angeordnet sind.

4. Elektronisches Expansionsventil nach Anspruch 3, wobei der erste Dichtungsabschnitt (50) ein erster Dichtungsring ist, der erste Dichtungsring zwischen dem Ventilsitzkern (22) und dem ersten Schalldämpfungsabschnitt (40) eingeklemmt ist, der erste Dichtungsabschnitt mit einem ersten Eingriffsvermeidungsloch (52) zum Vermeiden des Ventilschafts (30) bereitgestellt ist und eine Umfangsseitenwand des ersten Dichtungsabschnitts (50) an die Innenwand der Ventilnadel (20) angepasst ist.

5. Elektronisches Expansionsventil nach Anspruch 1, wobei der zweite Strömungsdurchgang (222) als ein erstes Strömungsloch ausgeführt ist, eine Vielzahl von ersten Strömungslöchern vorhanden ist und die Vielzahl von ersten Strömungslöchern in einer Umfangsrichtung der zweiten Ventilöffnung (221) angeordnet sind.

6. Elektronisches Expansionsventil nach Anspruch 5, wobei der dritte Strömungsdurchgang (51) als ein zweites Strömungsloch ausgeführt ist, eine Vielzahl von zweiten Strömungslöchern vorhanden ist und die Vielzahl von zweiten Strömungslöchern in Eins-zu-eins-Entsprechung mit der Vielzahl der ersten Strömungslöcher angeordnet sind.

7. Elektronisches Expansionsventil nach Anspruch 6, wobei die zweiten Strömungslöcher bogenförmige Löcher sind.

8. Elektronisches Expansionsventil nach Anspruch 1, wobei der erste Schalldämpfungsabschnitt (40) eine erste Schalldämpfungsstruktur (41) und eine zweite Schalldämpfungsstruktur (42) umfasst, die erste Schalldämpfungsstruktur (41) über der zweiten Schalldämpfungsstruktur (42) angeordnet ist, die erste Schalldämpfungsstruktur (41) dafür ausgelegt ist, den ersten Strömungsdurchgang (211) zu blockieren, und die zweite Schalldämpfungsstruktur (42) dafür ausgelegt ist, den dritten Strömungsdurchgang (51) zu blockieren.

9. Elektronisches Expansionsventil nach Anspruch 8, ferner umfassend einen zweiten Dichtungsabschnitt (60), wobei der zweite Dichtungsabschnitt (60) zwischen der ersten Schalldämpfungsstruktur (41) und der zweiten Schalldämpfungsstruktur (42) angeordnet ist, zu dem Zweck, die erste Schalldämpfungsstruktur (41) von der zweiten Schalldämpfungsstruktur (42) zu trennen.

10. Elektronisches Expansionsventil nach Anspruch 9, wobei der zweite Dichtungsabschnitt (60) ein zweiter Dichtungsring ist, der zweite Dichtungsring mit einem zweiten Eingriffsvermeidungsloch zum Vermeiden des Ventilschafts (30) bereitgestellt ist, und eine Umfangsseitenwand des zweiten Dichtungsabschnitts (60) an die Innenwand der Ventilnadel (20) angepasst ist.

11. Elektronisches Expansionsventil nach Anspruch 9, wobei der zweite Dichtungsabschnitt (60) aus einem Polymermaterial oder einem weichen metallischen Material hergestellt ist.

12. Elektronisches Expansionsventil nach Anspruch 8, wobei sowohl die erste Schalldämpfungsstruktur (41) als auch die zweite Schalldämpfungsstruktur (42) maschenartige Schalldämpfungselemente sind, die erste Schalldämpfungsstruktur (41) und die zweite Schalldämpfungsstruktur (42) einstückig ausgebildet sind und eine Größe einer Maschenöffnung der ersten Schalldämpfungsstruktur (41) sich von einer Größe einer Maschenöffnung der zweiten Schalldämpfungsstruktur (42) unterscheidet.

13. Elektronisches Expansionsventil nach Anspruch 1, ferner umfassend einen zweiten Schalldämpfungsabschnitt (70), der unterhalb der zweiten Ventilöffnung (221) angeordnet ist.

14. Kühlsystem, umfassend ein elektronisches Expansionsventil, wobei das elektronische Expansionsventil das elektronische Expansionsventil nach einem der Ansprüche 1 bis 13 ist.

## Revendications

1. Vanne de détente électronique, comprenant :
un corps de vanne (10) ayant un premier orifice de vanne (11) ;
un pointeau de vanne (20), le pointeau de vanne (20) ayant une position fermée en butée contre le premier orifice de vanne (11) et une position ouverte à l'écart du premier orifice de vanne (11), un dessous du pointeau de vanne (20) étant muni d'un second orifice de vanne (221) en communication avec le premier orifice de vanne (11), le pointeau de vanne (20) étant muni d'un espace de réception (23) ainsi que d'un premier passage d'écoulement (211) et d'un deuxième passage d'écoulement (222) tous deux en communication avec l'espace de réception (23), le premier passage d'écoulement (211) étant situé dans une paroi latérale du pointeau de vanne (20) et étant en communication avec un extérieur, et le deuxième passage d'écoulement (222) étant situé au niveau d'un côté externe périphérique du second orifice de vanne (221) et étant en communication avec le second orifice de vanne (221) ;
une tige de vanne (30), la tige de vanne (30) étant conçue pour permettre à au moins une partie de la tige de vanne (30) de pénétrer dans l'espace de réception (23) et la tige de vanne (30) étant mobile vers le haut et vers le bas pour régler un débit au niveau du second orifice de vanne (221);
une première partie silencieuse (40), la première partie silencieuse (40) étant agencée dans l'espace de réception (23) pour permettre à un fluide d'entrer depuis le premier passage d'écoulement (211) pour qu'il traverse la première partie silencieuse (40) pour qu'il s'écoule vers le deuxième passage d'écoulement (222);
une première partie d'étanchéité (50), la première partie d'étanchéité (50) étant agencée dans l'espace de réception (23) et située entre la première partie silencieuse (40) et le deuxième passage d'écoulement (222), la première partie d'étanchéité (50) étant munie d'un troisième passage d'écoulement (51), et l'espace de réception (23) étant en communication avec le deuxième passage d'écoulement (222) par l'intermédiaire du troisième passage d'écoulement (51); et
une partie d'entraînement, configurée pour entraîner la tige de vanne (30) pour qu'elle se déplace vers le haut et vers le bas ; et
un élément d'arrêt étant situé entre la tige de vanne (30) et le pointeau de vanne (20) pour permettre au pointeau de vanne (20) et à la tige de vanne (30) de se déplacer de façon synchrone quand le pointeau de vanne (20) est en contact avec la tige de vanne (30) par l'intermédiaire de l'élément d'arrêt ; et l'élément d'arrêt étant également configuré pour permettre à la tige de vanne (30) de se déplacer vers le haut et vers le bas par rapport au pointeau de vanne (20) quand le pointeau de vanne (20) est situé à la position fermée.

2. Vanne de détente électronique selon la revendication 1, dans laquelle la première partie d'étanchéité (50) est fabriquée dans un matériau polymère ou un matériau métallique tendre.

3. Vanne de détente électronique selon la revendication 1, dans laquelle le pointeau de vanne (20) comprend un corps de pointeau de vanne (21) et noyau de siège de vanne (22) agencé dans le corps de pointeau de vanne (21), l'espace de réception (23) est défini par une paroi interne du corps de pointeau de vanne (21) et par une surface supérieure du noyau de siège de vanne (22), et le second orifice de vanne (221) et le deuxième passage d'écoulement (222) sont agencés au niveau du noyau de siège de vanne (22).

4. Vanne de détente électronique selon la revendication 3, dans laquelle la première partie d'étanchéité (50) est une première bague d'étanchéité, la première bague d'étanchéité est serrée entre le noyau de siège de vanne (22) et la première partie silencieuse (40), la première partie d'étanchéité est munie d'un premier trou d'évitement d'interférence (52) pour éviter la tige de vanne (30), et une paroi latérale périphérique de la première partie d'étanchéité (50) est montée sur la paroi interne du pointeau de vanne (20).

5. Vanne de détente électronique selon la revendication 1, dans laquelle le deuxième passage d'écoulement (222) est intégré comme un premier trou d'écoulement, il y a une pluralité de premiers trous d'écoulement, et la pluralité de premiers trous d'écoulement sont agencés dans une direction périphérique du second orifice de vanne (221).

6. Vanne de détente électronique selon la revendication 5, dans laquelle le troisième passage d'écoulement (51) est intégré comme un second trou d'écoulement, il y a une pluralité de seconds trous d'écoulement, et la pluralité de seconds trous d'écoulement sont agencés en correspondance biunivoque avec la pluralité de premiers trous d'écoulement.

7. Vanne de détente électronique selon la revendication 6, dans laquelle les seconds trous d'écoulement sont des trous en forme d'arc.

8. Vanne de détente électronique selon la revendication 1, dans laquelle la première partie silencieuse (40) comprend une première structure silencieuse (41) et une seconde structure silencieuse (42), la première structure silencieuse (41) est située au-dessus de la seconde structure silencieuse (42), la première structure silencieuse (41) est configurée pour bloquer le premier passage d'écoulement (211), et la seconde structure silencieuse (42) est configurée pour bloquer le troisième passage d'écoulement (51).

9. Vanne de détente électronique selon la revendication 8, comprenant en outre une seconde partie d'étanchéité (60), la seconde partie d'étanchéité (60) étant agencée entre la première structure silencieuse (41) et la seconde structure silencieuse (42) pour séparer la première structure silencieuse (41) de la seconde structure silencieuse (42).

10. Vanne de détente électronique selon la revendication 9, dans laquelle la seconde partie d'étanchéité (60) est une seconde bague d'étanchéité, la seconde bague d'étanchéité est munie d'un second trou d'évitement d'interférence pour éviter la tige de vanne (30), et une paroi latérale périphérique de la seconde partie d'étanchéité (60) est montée sur la paroi interne du pointeau de vanne (20).

11. Vanne de détente électronique selon la revendication 9, dans laquelle la seconde partie d'étanchéité (60) est fabriquée dans un matériau polymère ou un matériau métallique tendre.

12. Vanne de détente électronique selon la revendication 8, dans laquelle la première structure silencieuse (41) et la seconde structure silencieuse (42) sont des éléments silencieux en maille, la première structure silencieuse (41) et la seconde structure silencieuse (42) sont formées d'une seule pièce, et une taille d'une ouverture de maille de la première structure silencieuse (41) est différente d'une taille d'une ouverture de maille de la seconde structure silencieuse (42).

13. Vanne de détente électronique selon la revendication 1, comprenant en outre une seconde partie silencieuse (70) agencée sous le second orifice de vanne (221).

14. Système de réfrigération, comprenant une vanne de détente électronique, la vanne de détente électronique étant la vanne de détente électronique selon l'une quelconque des revendications 1 à 13.
